# FASCICULE DE BREVET EUROPEEN

(11) **EP 2 385 778 B1**
(45) Date de publication et mention de la délivrance du brevet: **07.08.2013**
(21) Numéro de dépôt: 10706282.0
(22) Date de dépôt: 06.01.2010
(51) Int. Cl.: A47J 31/36

(54) **DISPOSITIF DE PERCOLATION**
PERKOLATIONSVORRICHTUNG
PERCOLATION DEVICE

(30) Priorité: 08.01.2009 FR 0950089
(43) Date de publication de la demande: 16.11.2011
(73) Titulaire: SEB SA, 69130 Ecully (FR)
(72) Inventeur: MORIN, Gilles, 21490 Varois et Chaignol (FR); TURPIN, Romain, 14210 Sainte Honorine du Fay (FR)
(74) Mandataire: Novagraaf Technologies
(86) Numéro de dépôt international: PCT/FR2010/050009
(87) Numéro de publication internationale: WO 2010/079298

(56) Documents cités:
- EP-A- 0 407 365
- EP-A- 0 496 242
- EP-A- 1 336 365

## Description

La présente invention concerne un dispositif de percolation, et plus particulièrement, un dispositif permettant de réaliser du café sous forme de boisson à partir de mouture en vrac (c'est-à-dire non conditionnée dans des dosettes), soit sous forme de poudre (issue de grains moulus), soit sous forme de comprimé (issu d'une compression de poudre).

On connaît des dispositifs de percolation pour grand public permettant de faire du café du type expresso à partir de mouture conditionnée dans des dosettes, ces dispositifs présentant l'avantage de pouvoir être utilisés très facilement. Cependant leurs inconvénients majeurs résident justement dans l'emploi des dosettes. Chaque dispositif de percolation ne peut accepter qu'un seul type de dosettes provenant d'un fournisseur exclusif. De ce fait, les prix sont relativement élevés (en tout cas supérieurs à ceux des moutures vendues usuellement dans les grandes surfaces), et le choix de mouture est assez faible (en tout cas ne peut pas répondre aux exigences d'amateurs se procurant habituellement chez des torréfacteurs). De plus, l'emballage de chaque dosette pose également un problème environnemental.

On connaît par ailleurs, notamment d'après la demande FR 2 671 960, un dispositif de percolation comportant une chambre de percolation pour la percolation de mouture de café en vrac, le dispositif comprenant un socle dans lequel est réalisée une ouverture d'expulsion pour l'expulsion de la mouture usagée hors de la chambre de percolation, une chemise comportant une ouverture d'éjection axiale pour l'expulsion de la mouture hors de la chambre de percolation et mobile selon une direction axiale entre au moins une position de percolation dans laquelle elle obstrue l'ouverture d'expulsion et une position d'éjection dans laquelle elle la dégage, une tête de tassage adjacente à l'ouverture d'éjection et délimitant axialement la chambre de percolation et l'ouverture d'expulsion, un organe de compression comprenant une surface de compression qui délimite axialement la chambre de percolation à l'opposé de la tête de tassage et mobile axialement entre une position d'admission et une position de percolation dans laquelle il est plus proche de la tête de tassage que lorsqu'il est dans sa position d'admission, et un organe d'activation mobile entre une position d'admission et une position de percolation.

Seulement un tel appareil est particulièrement complexe, volumineux, notamment du fait de sa motorisation et de la réalisation de l'entraînement de la chemise et de l'organe de compression par des rainures de guidage réalisées dans une vis sans fin.

La présente invention vise à réaliser un dispositif à percolation pour mouture en vrac qui soit aussi simple à utiliser et aussi peu encombrant qu'un dispositif à percolation pour mouture en dosette.

Selon l'invention, l'organe d'activation est formé par un levier qui, en particulier lors de son mouvement de va-et-vient formé par son déplacement de sa position d'admission à sa position de percolation puis par le déplacement inverse, est adapté à entraîner de façon différentiée le mouvement de la chemise et celui de l'organe de compression de sorte que, quand la chemise est dans sa position d'éjection, la mouture, entraînée hors de la chemise via l'ouverture d'éjection par la surface de compression, est au droit de l'ouverture d'expulsion.

Un tel dispositif se présentant avec un organe d'activation aussi simple permet à tout utilisateur de réaliser du café en boisson à partir d'un simple mouvement de va-et-vient effectué par cet organe pendant lequel, dans un premier temps, la mouture est comprimée dans la chambre de percolation, dans un second temps, de l'eau sous pression est injectée dans cette chambre produisant la boisson, et dans un troisième temps, le marc de café est éjecté de cette chambre.

D'autres avantages et particularités de la présente invention apparaîtront dans la description de trois modes de réalisation donnés à titre d'exemples non limitatifs et illustrés par les dessins mis en annexe dans lesquels :

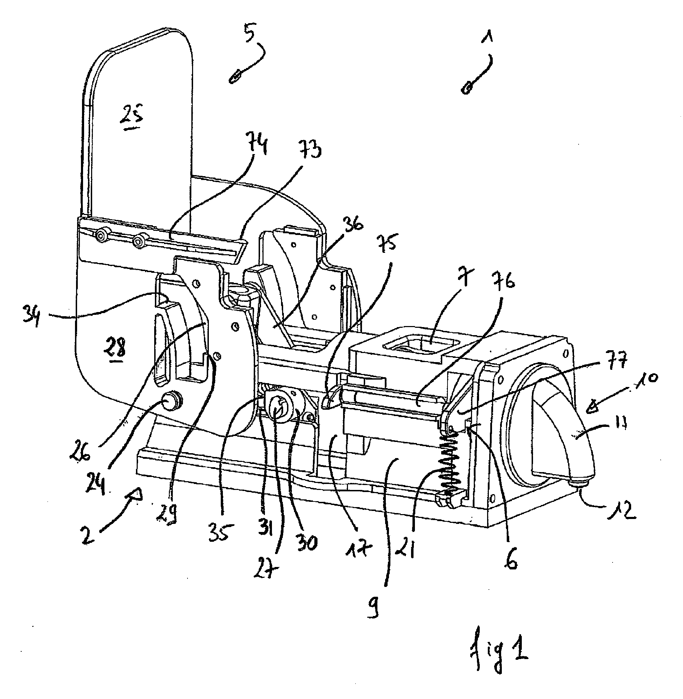

La figure 1 est une vue en perspective d'un dispositif de percolation conforme à un premier mode de réalisation, l'organe d'activation étant dans sa position d'admission,
La figure 2 est une vue similaire à la figure 1, le socle et la chemise étant en coupe pour permettre la visualisation de l'organe de compression et des moyens le reliant à l'organe d'activation,
La figure 3 est une vue latérale du dispositif de percolation dans laquelle le socle est en coupe pour permettre la visualisation de la chemise et sa liaison avec l'organe d'activation, celui-ci étant presque en position de percolation,

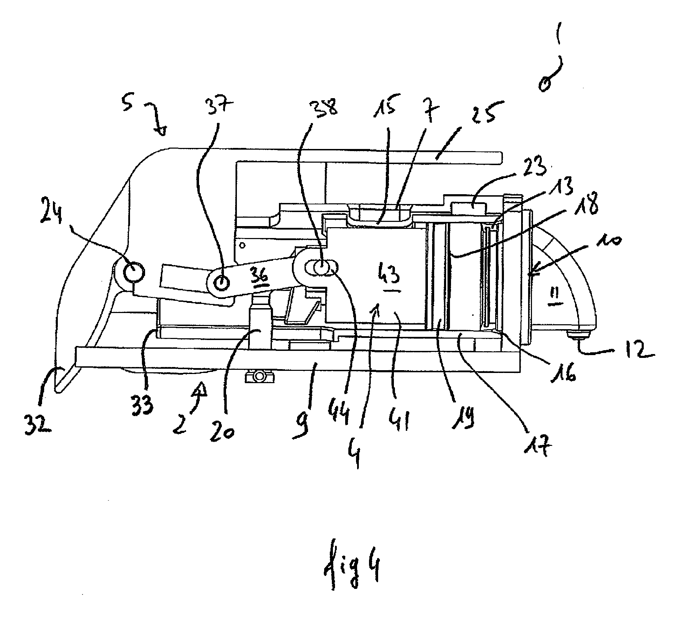

La figure 4 est une vue latérale du dispositif de percolation dans laquelle le socle et la chemise sont en coupe pour permettre la visualisation de l'organe de compression et sa liaison avec l'organe d'activation, celui-ci étant en position de percolation,

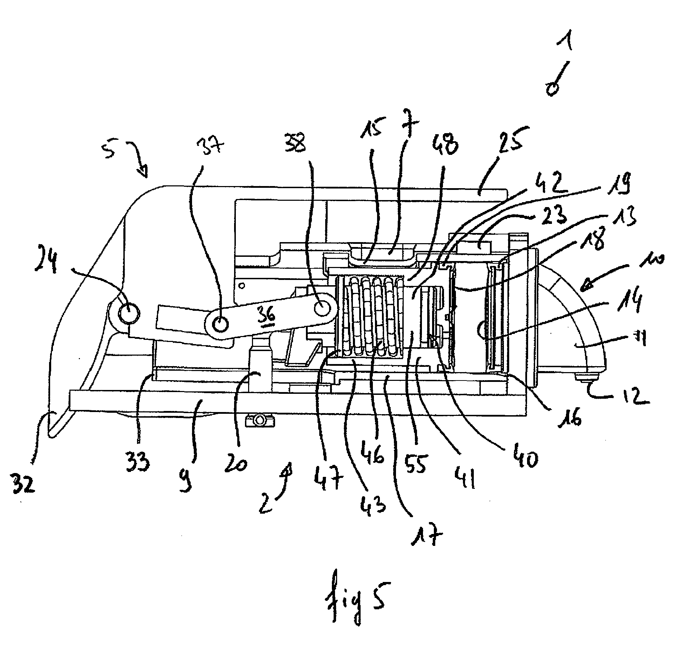

La figure 5 est une vue latérale du dispositif de percolation dans laquelle le socle, la chemise et le manchon de tassement qui fait partie de l'organe de compression sont en coupe pour permettre la visualisation de la buse d'injection qui est la partie complémentaire de l'organe de compression et qui est entouré par le manchon de tassement, l'organe d'activation étant en position de percolation,

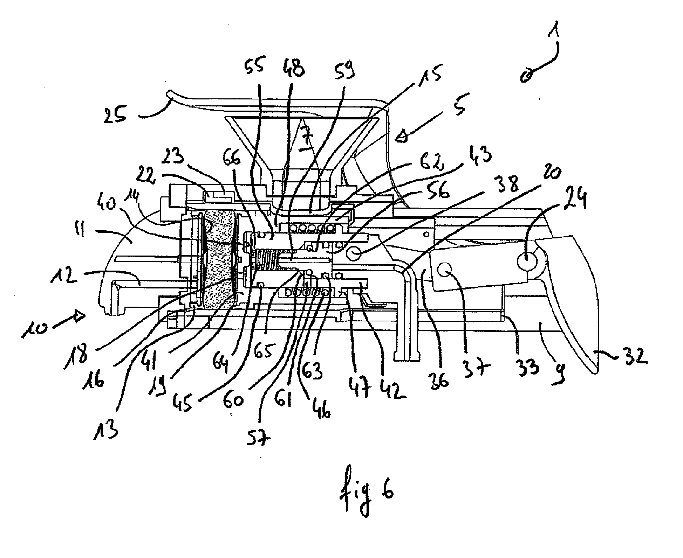

La figure 6 est une vue latérale en coupe du dispositif de percolation dans laquelle la chemise, l'organe de compression et l'organe d'activation sont dans la même position qu'à la figure 5, le manchon de tassement étant dans une position de tassement ajustée à la quantité de mouture, et le clapet qui fait partie de la buse d'injection étant en position d'ouverture,
La figure 7 est une vue similaire à la figure 6, le clapet étant en position de fermeture,
La figure 8 est une vue similaire à la figure 7, le manchon de tassement étant en position de percolation,

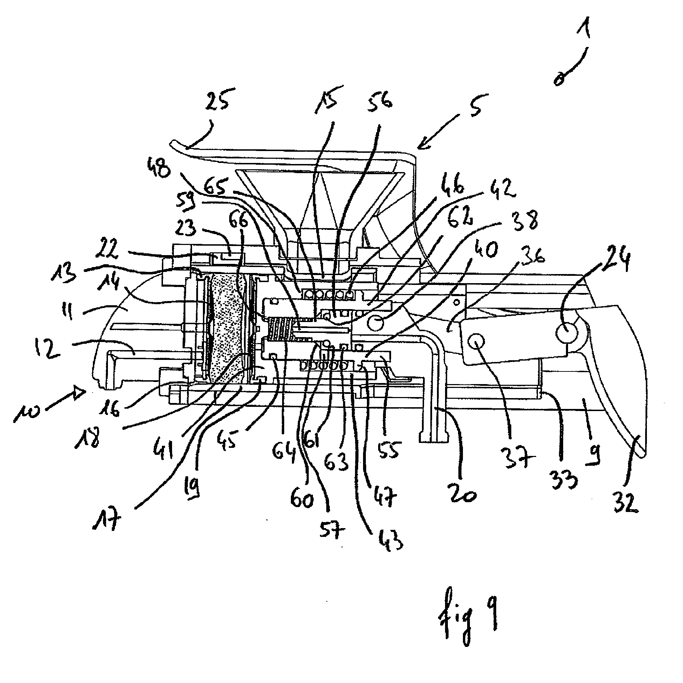

La figure 9 est une vue similaire à la figure 8, le clapet étant en position d'ouverture,

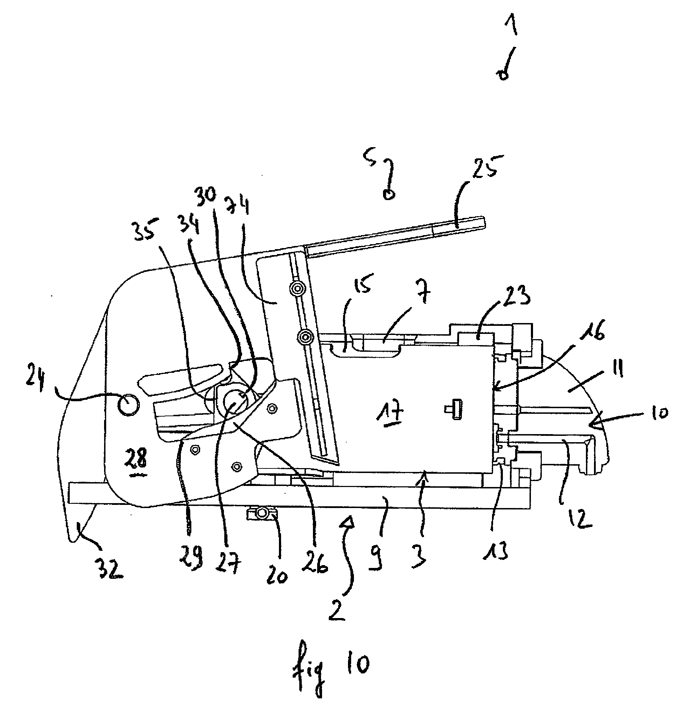

La figure 10 est une vue similaire à la figure 3 dans laquelle l'organe d'activation vient de quitter sa position de percolation et la chemise est entraînée vers sa position d'éjection,

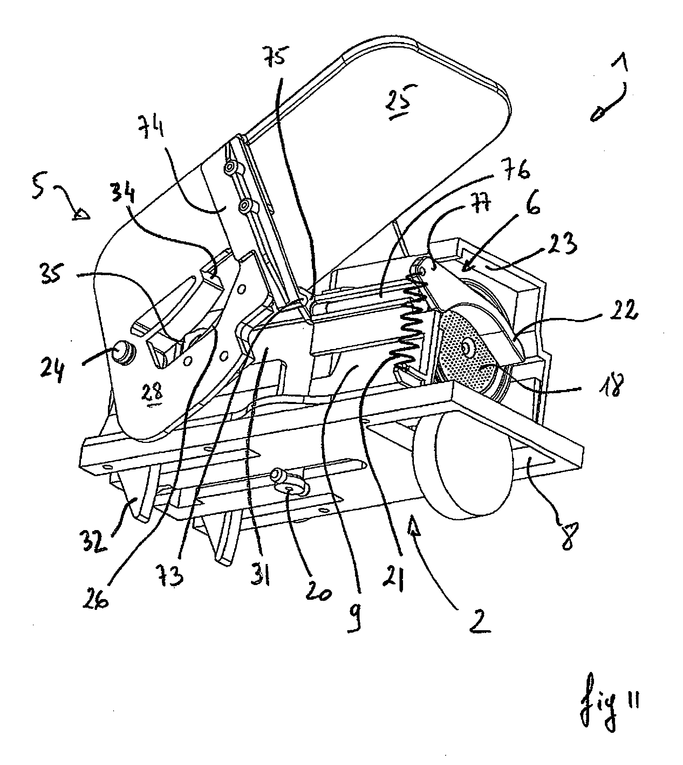

La figure 11 est une vue en perspective de dessous dans laquelle l'organe d'activation est dans sa position d'éjection, la tête de tassage n'étant pas représentée,

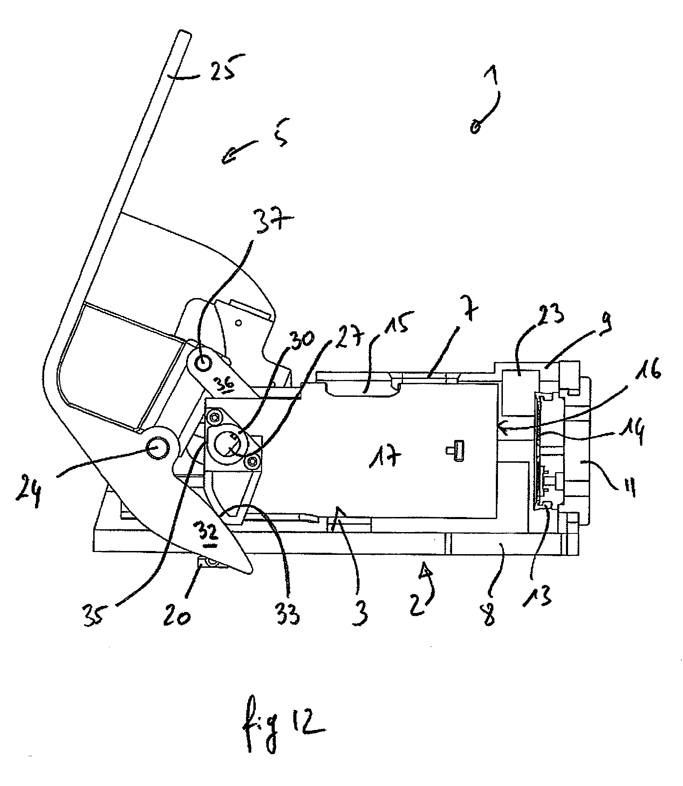

La figure 12 est une vue similaire à la figure 10 dans laquelle l'organe d'activation arrive dans sa position d'admission et la chemise est entraînée vers sa position de percolation,

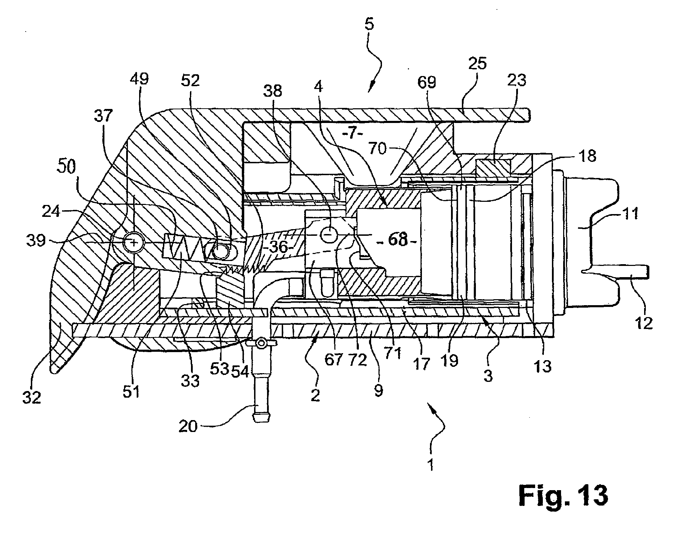

La figure 13 est une vue similaire à la figure 4 illustrant un dispositif de percolation selon un second mode de réalisation, et
La figure 14 est une vue similaire à la figure 3 illustrant un dispositif de percolation selon un troisième mode de réalisation.

Comme illustré dans les différentes figures, un dispositif de percolation 1 pour de la mouture de café en vrac comprend un socle 2, une chemise 3 mobile par rapport au socle 2, un organe de compression 4 mobile par rapport au socle 2 et à la chemise 3 et un organe d'activation 5 mobile par rapport au socle 2, à la chemise 3 et à l'organe de compression 4. En outre, dans les présents modes de réalisation, le dispositif de percolation 1 comprend également un éjecteur 6 mobile par rapport au socle 2, à la chemise 3, à l'organe de compression 4 et à l'organe d'activation 5.

Le socle 2 délimite une chambre de travail (ici de forme cylindrique) dans laquelle la chemise 3 est montée de façon coulissante (selon l'axe de la chambre de travail), la section droite de la chambre de travail correspondant à celle de la chemise 3 de sorte que son mouvement de translation soit son seul degré de liberté. La chambre de travail est accessible de l'extérieur par une ouverture supérieure d'introduction 7 par laquelle de la mouture de café peut être introduite dans la chambre, et une ouverture inférieure d'expulsion 8 par laquelle la mouture usagée peut en sortir.

Dans les présents exemples, le socle 2 comprend, d'une part, un carter 9 qui délimite radialement la chambre de travail, et, d'autre part, une tête de tassage 10 qui forme une délimitation axiale de la chambre. Dans le présent mode de réalisation, l'ouverture d'introduction de mouture 7 et l'ouverture d'expulsion de mouture 8 sont réalisées dans le carter 9, cette dernière ouverture 8 étant par ailleurs délimitée par la tête de tassage 10.

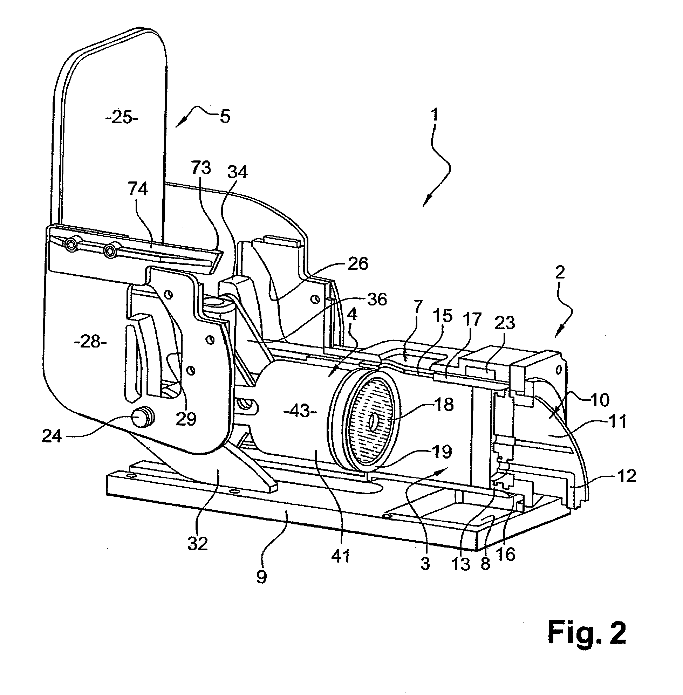

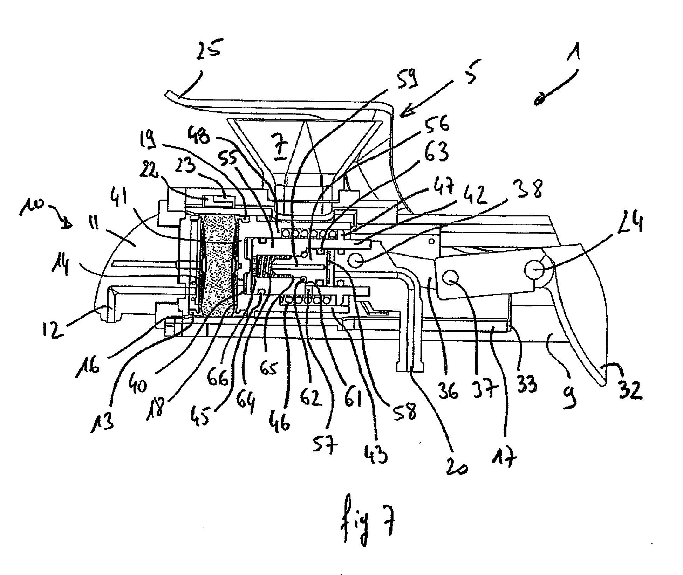

De plus, dans les présents modes de réalisation, afin de faciliter le nettoyage de la chambre de travail, la tête de tassage 10 est montée de façon amovible par rapport au carter 9. En outre, elle comprend un embout 11 qui forme le corps de la tête 10 et qui est adapté à être fixé au carter 9 de façon à obstruer l'ouverture axiale de ce dernier. L'embout 11 comporte d'une part, une conduite d'évacuation de boisson 12 qui le traverse et qui permet la sortie du café liquide obtenu par percolation, et, d'autre part, une rainure périphérique dans laquelle est monté un joint d'étanchéité 13. La tête de tassage 10 comprend également un filtre à café 14 qui est fixé contre l'embout 11 et qui forme la limite axiale de la chambre de travail (cf. figures 2 et 7).

La chemise 3 délimite une chambre de compression (ici, de forme cylindrique) dans laquelle l'organe de compression 4 est monté coulissant (selon l'axe de la chambre de compression), la section droite de la chambre de compression correspondant à celle de l'organe de compression 4 de sorte que son mouvement de translation soit son seul degré de liberté. La chambre de compression est accessible par une ouverture supérieure d'admission de mouture 15 par laquelle la mouture peut être introduite dans la chambre, et une ouverture axiale d'éjection 16 par laquelle la mouture usagée peut en sortir.

La chemise 3 est montée mobile dans le carter 9 entre au moins une position de percolation et une position d'éjection. En position de percolation, la chemise obstrue l'ouverture d'expulsion de mouture 8 et l'ouverture d'admission de mouture 15 prolonge l'ouverture d'introduction de mouture 7 de sorte que la chambre de compression est accessible de l'extérieur. En position d'éjection, la chemise 3 dégage l'ouverture d'expulsion 8.

Dans les présents exemples, la chemise 3 comprend un cylindre 17 creux qui délimite radialement la chambre de compression et dans lequel est réalisée l'ouverture d'admission 15. L'extrémité axiale du cylindre 17 qui est adjacente à la tête de tassage 10, d'une part, délimite l'ouverture d'éjection 16, et d'autre part, obstrue l'ouverture d'expulsion 8 quand la chemise 3 est en position de percolation et la libère quand la chemise 3 est en position d'éjection. En outre, quand la chemise 3 est en position de percolation, cette extrémité axiale du cylindre 17 est disposée dans une gorge annulaire délimitée par le carter 9 et l'embout 11, l'étanchéité étant assurée par le joint d'étanchéité 13.

L'organe de compression 4 est monté mobile dans le cylindre 17 (et donc dans le carter 9) entre une position de percolation et une position d'admission. La partie de la chambre de compression qui est délimitée axialement, d'une part, par la tête de tassage 10, et, d'autre part, par l'organe de compression 4, forme une chambre de percolation dans laquelle la mouture est comprimée et dans laquelle la percolation a lieu. Plus précisément, la chambre de percolation est délimitée par une surface de compression 18 qui est la surface axiale de l'organe de compression 4 venant en contact avec la mouture. En position d'admission, l'ouverture d'introduction 7 débouche dans la chambre de percolation (elle est axialement disposée entre l'organe de compression 4 et la tête de tassage 10). Quand l'organe de compression 4 est en position de percolation, la mouture est comprimée, et, dans le présent mode de réalisation, l'intégralité de la chambre de percolation est située au droit de l'ouverture d'expulsion 8. Quand à la fois l'organe de compression 4 est dans sa position de percolation et la chemise 3 est dans sa position d'éjection, la surface de compression 18 est hors du cylindre 17 ou au niveau de l'ouverture d'éjection de la mouture 16.

Par ailleurs, afin de garantir l'étanchéité de la chambre de percolation, l'organe de compression 4 comprend, à sa périphérie, un joint d'étanchéité 19. L'organe de compression 4 comprend également un système d'injection d'eau sous pression permettant la réalisation du café sous forme de boisson. Ce système comprend, d'une part, une douchette d'éjection d'eau qui forme la surface de compression 18 et qui permet l'introduction de l'eau dans cette chambre, et, d'autre part, une conduite d'amenée d'eau 20 qui est fixée à l'organe de compression 4 par sa face axiale opposée à la surface de compression 18 (la face située hors de la chambre de percolation).

L'éjecteur 6 est porté par le socle 2 (par le carter 9) et est monté mobile (ici en rotation) entre une position d'éjection et une position de repos. En position d'éjection, l'éjecteur 6 éjecte la mouture hors du dispositif de percolation 1 par l'ouverture d'expulsion 8 qui est dégagée par la chemise 3 en position d'éjection. Dans les présents modes de réalisation, l'éjecteur 6 est sollicité dans sa position de repos par un élément élastique 21 (ici, un ressort de rappel 21). De façon plus précise, l'éjecteur 6 comprend une patte d'éjection 22 qui, quand l'éjecteur 6 est dans sa position de repos, est disposée dans un logement 23 réalisé dans le carter 9, au droit de l'ouverture d'expulsion 8. Dans les présents modes de réalisation, la patte d'éjection 22 entraîne la mouture par l'ouverture d'expulsion 8 quand cette mouture est hors du cylindre 17 du fait de la position relative de la chemise 3 et de la surface de compression 18.

L'organe d'activation 5 est mobile entre une position d'admission et une position de percolation et est adapté à entraîner le mouvement de la chemise 3 et de l'organe de compression 4 ainsi que, dans le présent mode de réalisation, l'éjecteur 6.

En l'occurrence, l'organe d'activation 5 est formé par un levier 5 qui est monté en rotation par rapport au socle 2 autour d'un arbre principal 24 (ici, fixe), situé à l'opposé de la tête de tassage 10. Dans les présents exemples, le levier 5 comprend une aile d'actionnement 25 qui forme l'organe de commande manuelle et qui, quand le levier 5 est dans sa position de percolation, est sensiblement horizontale et recouvre l'ouverture d'introduction 7, et, quand le levier 5 est dans sa position d'admission, est sensiblement verticale et dégage cette ouverture 7.

Le levier 5 est conformé de sorte que, quand il passe de sa position d'admission à sa position de percolation, premièrement, il entraîne l'organe de compression 4 de sa position d'admission à sa position de percolation, deuxièmement, il laisse la chemise 3 dans sa position de percolation, et troisièmement, il laisse l'éjecteur 6 dans sa position de repos. D'autre part, quand il passe de sa position de percolation à sa position d'admission, premièrement, il entraîne l'organe de compression 4 de sa position de percolation à sa position d'admission, deuxièmement, il entraîne la chemise 3 dans un mouvement de va-et-vient de sa position de percolation à sa position de percolation en passant par sa position d'éjection, et troisièmement, il entraîne l'éjecteur 6 dans un mouvement de va-et-vient de sa position de repos à sa position de repos en passant par sa position d'éjection (en l'occurrence, il entraîne l'éjecteur de sa position de repos à sa position d'éjection puis le libère, laissant le ressort de rappel 21 l'entraîner à sa position de repos).

Concernant l'entraînement de la chemise 3, le levier 5 comprend deux éléments d'entraînement, l'un pour le mouvement de la chemise 3 de la position de percolation à sa position extrême de va-et-vient, l'autre pour le mouvement inverse.

Dans les présents modes de réalisation, afin d'entraîner la chemise 3 de la position de percolation à sa position extrême de va-et-vient, le levier 5 comprend au moins un (ici, deux) organe d'assujettissement sélectif 26 qui est adapté à coopérer avec un organe complémentaire d'assujettissement sélectif 27 porté par la chemise 6. De façon plus précise, quand le levier 5 passe de sa position de percolation à sa position d'admission, dans un premier temps, l'organe complémentaire d'assujettissement sélectif 27 est assujetti à l'organe d'assujettissement sélectif 26 (ce qui entraîne le déplacement de la chemise 3 de sa position de percolation à sa position extrême de va-et-vient), et dans un deuxième temps il en est libéré. Ainsi, le levier 5 passe par une position de libération dans laquelle l'organe complémentaire d'assujettissement sélectif 27 devient libéré de l'organe d'assujettissement sélectif 26 et dans laquelle la chemise 3 est dans sa position extrême de va-et-vient. Et quand le levier 5 passe de sa position d'admission à sa position de percolation, dans un premier temps, l'organe complémentaire d'assujettissement sélectif 27 est libéré de l'organe d'assujettissement sélectif 26, et dans un deuxième temps il s'y assujettit. Ainsi, le levier 5 passe par une position d'assujettissement dans laquelle l'organe complémentaire d'assujettissement sélectif 27 devient assujetti à l'organe d'assujettissement sélectif 26.

En l'occurrence, chaque organe d'assujettissement sélectif 26 est une nervure 26 formant une surface de came et portée par une aile latérale 28 du levier 5. Les deux ailes latérales 28 sont pendantes depuis l'aile d'actionnement 25, orientées de façon sensiblement verticale, et disposées de part et d'autre du carter 9. L'extrémité longitudinale 29 de chaque nervure 26 adjacente à l'arbre principal 24 définit la position extrême de va-et-vient de la chemise 3 et la position de libération du levier 5. En parallèle, chacun des deux organes complémentaires d'assujettissement sélectif 27 est formé par un ergot 27 qui est monté mobile par rapport à la chemise 3 entre une position escamotée permettant son assujettissement à la nervure 26 correspondante, et une position déployée dans laquelle il est adapté à recevoir la nervure 26 en butée de façon à y être assujetti. En l'occurrence, chaque ergot 27 est sollicité dans sa position déployée par un ressort de déploiement. Les surfaces de contact correspondantes des ergots 27 et des nervures 26 sont conformées de sorte que l'assujettissement est réalisé par le franchissement de chaque nervure 26 et l'encliquetage consécutif de l'ergot 27 correspondant, et que, assujetti, chaque ergot 27 est mis en butée contre la surface supérieure de la nervure correspondante 26 par le déplacement du levier 5. De façon plus précise, chaque ergot 27 est monté mobile dans une embase 30 qui fait saillie du cylindre 17 (et qui fait donc partie de la chemise 3) et qui traverse une fente de guidage 31 réalisée dans le carter 9. Ainsi, chaque embase 30 est montée coulissante de façon emprisonnée dans la fente de guidage 31 correspondante.

Afin d'entraîner la chemise 3 de la position extrême de va-et-vient à la position de percolation, le levier 5 comprend une patte d'entraînement 32 qui est adaptée à venir en butée contre une surface de butée 33 de la chemise 3 quand celle-ci est dans sa position extrême de va-et-vient et quand le levier 5 est dans une position de fermeture disposée entre sa position de libération et sa position d'admission. Cette patte d'entraînement 32 permet ainsi d'entraîner la chemise 3 de sa position extrême de va-et-vient à sa position de percolation quand l'organe d'activation 5 passe de sa position de fermeture à sa position d'admission. Ici, la surface de butée 33 est réalisée à la seconde extrémité axiale de la chemise 3 opposée à celle adjacente définissant l'ouverture d'éjection 16, et, en parallèle, la patte d'entraînement 32 est formée par une aile arrière 32 du levier 5 qui est pendante de l'aile d'actionnement 25 et rejoint les deux ailes latérales 28.

Par ailleurs, dans le premier mode de réalisation, le levier 5 et la chemise 3 sont conformés de sorte que, quand ils sont en position de percolation, la chemise 3 est verrouillée afin d'éviter son recul et d'assurer l'étanchéité entre celle-ci et la tête de tassage 10 au niveau du joint d'étanchéité correspondant 13. De façon plus précise, chaque aile latérale 28 comprend une surface anti-recul 34 contre laquelle vient en butée une surface anti-recul complémentaire 35 portée par l'embase 30 correspondante ; cette mise en contact se faisant lors de la venue du levier 5 en position de percolation.

Pour l'entraînement de l'organe de compression 4, le levier 5 coopère avec au moins une (ici, deux) bielle 36. Chaque bielle 36 est montée en rotation, d'une part, autour d'un premier arbre de liaison 37 porté par le levier 5, et, d'autre part, autour d'un second arbre de liaison 38 porté par l'organe de compression 4. Ainsi, quand le levier 5 passe de sa position d'admission à sa position de percolation, l'organe de compression 4 passe de sa position d'admission à sa position de percolation, et quand le levier 5 passe de sa position de percolation à sa position d'admission, l'organe de compression 4 passe de sa position de percolation à sa position d'admission. Dans les présents modes de réalisation, pour chaque bielle 36, l'arbre principal 24 et l'arbre de liaison 38 porté par l'organe de compression 4 forment une droite 39 qui est franchie par l'arbre de liaison 37 porté par le levier 5 quand l'organe de compression 4 est proche de sa position de percolation, de façon à former une liaison à genouillère. Le levier 5 en position de percolation est en butée contre le socle 2, ce qui empêche le recul de l'organe de compression 4 lors de la percolation (l'eau étant en général sous une pression proche de 15 bars).

Par ailleurs, dans les présents modes de réalisation, la liaison entre le levier 5 et la surface de compression 18 est conformée de sorte que la position de percolation de cette surface 18 est ajustée à la quantité de mouture introduite dans la chambre de percolation (la position de percolation du levier 5 étant toujours la même).

Dans le premier mode de réalisation, l'organe de compression 4 comprend une buse d'injection 40 qui forme le corps de l'organe de compression 4, et un manchon de tassement 41 qui porte la surface de compression 18.

Le manchon de tassement 41 est monté mobile en translation par rapport à la buse d'injection 40 selon la direction axiale entre une position d'extension et une position de percolation dans laquelle il est plus éloigné de la tête de tassage 10 qu'en position d'extension et dans laquelle il est en butée contre la buse d'injection 40.

La buse d'injection 40 porte le second arbre de liaison 38 et comprend la conduite d'amenée d'eau 20. Elle comporte également une paroi cylindrique 42 qui s'étend axialement en direction de la tête de tassage 10 et de la surface de compression 18 à partir de l'orifice de sortie de la conduite d'amenée d'eau 20. La paroi cylindrique définit une cavité d'injection d'eau débouchant dans une chambre à eau délimitée par le manchon de tassement 41.

Le manchon de tassement 41 comprend, outre la surface de compression 18, une paroi annulaire 43 qui ceinture la partie avant de la buse d'injection 40 (la partie avant de la paroi cylindrique 42) et qui porte le joint d'étanchéité 19 (ici, au niveau de la surface de compression 18). Par ailleurs, la paroi annulaire 43 possède une fente de passage 44 qui permet le coulissement du second arbre de liaison 38 lors du déplacement du manchon de tassement 41 par rapport à la buse d'injection 40.

Afin d'assurer l'étanchéité de la liaison entre la buse d'injection 40 et le manchon de tassement, dans le présent exemple, la surface extérieure de la paroi cylindrique 42 comprend une rainure annulaire dans laquelle est monté un joint d'étanchéité 45 qui est en contact avec la face intérieure de la paroi annulaire 43.

De plus, dans le présent exemple, le manchon de tassement 41 est sollicité dans sa position d'extension par un élément élastique 46 (un ressort 46) qui prend appui sur le manchon de tassement 41 et sur la buse d'injection 40. Ici, le ressort 46 est un ressort à boudin qui entoure la buse d'injection 40 (la paroi cylindrique 42) et qui est entouré par le manchon de tassement 41 (la paroi annulaire 43). De façon plus précise, la paroi cylindrique 42 de la buse d'injection 40 comprend un épaulement annulaire 47 faisant saillie vers l'extérieur, et parallèlement, la paroi annulaire 43 comprend une paroi annulaire 48 faisant face à l'épaulement annulaire 47, ce dernier et la paroi annulaire 48 servant d'appui pour le ressort 46.

Dans le second mode de réalisation, la liaison entre le levier 5 et l'organe de compression 4 est conformée de sorte que la position de percolation de l'organe de compression 4 est ajustée à la quantité de mouture introduite dans la chambre de percolation (la position de percolation du levier 5 étant toujours la même).

Dans le second mode de réalisation, un 37 des deux arbres de liaison 37, 38 (ici, celui 37 porté par le levier 5) est monté de façon coulissante dans deux fentes oblongues 49. Ainsi, cet arbre 37 est mobile entre une position avancée qui correspond à une faible quantité de mouture introduite dans la chambre de percolation, et une position reculée qui correspond à une quantité importante de mouture. En outre, l'arbre mobile 37 est sollicité dans sa position avancée par un élément élastique 50 (en l'occurrence un ressort d'ajustement 50 qui est logé dans une cavité 51 réalisée dans le levier 5 et traversée par la fente oblongue 49) prenant appui contre l'arbre 37 et le levier 5.

Dans ce second mode de réalisation, afin d'éviter le recul de l'organe de compression 4 lors de la percolation (l'eau est en général sous une pression proche de 15 bars et peut atteindre 19 bars) quand l'organe de compression 4 et le levier 5 sont dans leur position de percolation, chaque bielle 36 (au niveau de l'arbre de liaison 37 porté par l'organe d'activation 4) comprend des organes d'arrêt 52 (ici, des crans 52) qui viennent en butée contre des organes d'arrêt complémentaires 53 (ici, des crans 53) d'un élément d'appui 54 fixé au carter 9. Ainsi, dans ce second mode de réalisation, l'ajustement de la position de l'organe de compression 4 est maintenu pendant la percolation.

Par ailleurs, dans le premier mode de réalisation, l'organe de compression 4 est adapté à permettre un assèchement de la mouture une fois la percolation finie.

Ainsi, dans ce mode de réalisation, la liaison élastique entre la surface de compression 18 (portée par le manchon de tassement 41) et la buse d'injection 40 permet, quand la percolation est terminée et la pompe à eau arrêtée, de comprimer à nouveau la mouture utilisée. De ce fait, l'eau antérieurement située entre la mouture et la surface de compression 18 ainsi qu'une portion de l'eau contenue dans la mouture traverse à nouveau la surface de compression 18 et pénètre dans l'organe de compression 4 (dans la chambre d'injection d'eau et dans la cavité à eau).

Dans le premier mode de réalisation, la buse d'injection 40 est par ailleurs conformée de façon à permettre, d'une part, l'évacuation de l'eau qui pénètre à nouveau dans l'organe de compression 4, et, d'autre part, d'améliorer l'assèchement de la mouture en aspirant une quantité d'eau qui y est encore présente malgré la compression du manchon de tassement 41 en fin de percolation.

De façon plus précise, la buse d'injection 40 comprend une douille d'injection 55 qui forme le corps principal de la buse d'injection 40, et un clapet 56 qui est monté mobile en translation par rapport à la douille d'injection 55 selon la direction axiale entre une position de fermeture et une position d'ouverture.

Dans le présent exemple, la douille d'injection 55 comprend la paroi cylindrique 42 de la buse d'injection 40 et la conduite d'amenée d'eau 20 et porte le second arbre de liaison 38. Elle délimite intérieurement la cavité d'injection d'eau dans laquelle le clapet 56 est monté coulissant. En outre, la paroi cylindrique 42 est traversée par un passage d'évacuation 57 réalisé dans le secteur angulaire inférieur (de façon à être situé au plus bas quand le dispositif de percolation 1 est correctement disposé sur un plan de travail) et communiquant avec un bac de récupération d'eau à pression atmosphérique. Ce passage d'évacuation 57 est obstrué par le clapet 56 quand ce dernier est dans sa position de fermeture, et est dégagé quand il est dans sa position d'ouverture.

Le clapet 56 est disposé entre la sortie de la conduite d'amenée d'eau 20 et la chambre à eau et est conformé de façon à pouvoir être entraîné de sa position d'ouverture à sa position de fermeture par l'eau sortant de la conduite d'amenée d'eau 20 tout en permettant l'alimentation en eau de la chambre de percolation. De façon plus précise, il comprend une paroi axiale amont 58 qui fait face à la conduite d'amenée d'eau 20 et qui permet à l'eau en sortant sous pression de l'entraîner dans sa position de fermeture. Il est par ailleurs traversé par un canal 59 permettant le passage de l'eau de la conduite d'amenée d'eau 20 à la surface de compression 18, la section du canal 59 étant de faible section par rapport à celle de la paroi axiale amont 58 de façon à permettre le déplacement du clapet 56. Par ailleurs, la section droite du clapet 56 correspond à celle de la cavité d'évacuation d'eau de sorte que son mouvement de translation soit son seul degré de liberté.

Dans le présent mode de réalisation, la position d'ouverture du clapet 56 est définie par la mise en butée de sa paroi axiale amont 58 contre la conduite d'amenée d'eau 20. Sa position de fermeture, quant à elle, est définie par la mise en butée du clapet 56 contre une surface annulaire d'arrêt 60 réalisée à la surface intérieure de la paroi cylindrique 42 de la douille d'injection 55 (ici, il s'agit de la mise en butée d'une paroi annulaire d'arrêt 61 qui est portée par la surface cylindrique du clapet 56 et qui fait face à la surface annulaire d'arrêt 60).

L'étanchéité de l'obstruction du passage d'évacuation 57 par le clapet 56 en position de fermeture est assurée à la fois vis-à-vis de l'eau située entre la conduite d'évacuation d'eau 20 et la paroi axiale amont 58 du clapet 56, et vis-à-vis de l'eau située dans la chambre à eau et dans la partie aval de la cavité d'injection d'eau (en aval du clapet 56). A cet effet, il y a deux joints toriques 62, 63 disposés entre le clapet 56 et la douille d'injection 55, ces deux joints 62, 63 étant disposés axialement de part et d'autre du passage d'évacuation 57. Dans le présent exemple, le joint torique aval 62 est disposé dans un logement réalisé à l'intersection de la paroi annulaire d'arrêt 61 avec la surface cylindrique extérieure du clapet 56. Ce joint 62 se déforme et épouse la forme de la surface annulaire d'arrêt 60 de la douille d'injection 55. Le joint torique amont 63 est disposé dans une rainure réalisée dans la surface cylindrique extérieure du clapet 56, et est en contact avec la surface interne de la paroi cylindrique 42 de la douille d'injection 55.

En outre, dans le présent exemple, le clapet 56 est sollicité dans sa position d'ouverture par un élément élastique 64 (ici, un ressort 64) qui prend appui sur le clapet 56 et sur la douille d'injection 55. Ici, le ressort 64 est un ressort à boudin qui entoure le clapet 56 (sa partie aval) et qui est entouré par la douille d'injection 55 (la paroi cylindrique 42). De façon plus précise, la surface extérieure du clapet 56 comprend un épaulement annulaire d'appui 65, et parallèlement, la paroi cylindrique 42 comprend une paroi annulaire d'appui 66 faisant face à l'épaulement annulaire d'appui 65, ce dernier et la paroi annulaire d'appui 66 servant d'appui au ressort 64.

En outre, dans le second mode de réalisation, afin que le joint d'étanchéité 19 soit efficace pendant la percolation sans toutefois générer des frottements importants avec le cylindre 17 lors du déplacement de l'organe de compression 4, ce dernier est conformable entre un état de déplacement dans lequel le joint d'étanchéité 19 est comprimé selon une première intensité et un état de percolation dans lequel il est comprimé selon une seconde intensité plus forte que la première. Plus l'intensité de compression du joint d'étanchéité 19 est importante, plus il fait saillie radialement au-delà de la surface périphérique de l'organe de compression 4, plus la surface de contact avec la chemise 3 est importante, et plus l'étanchéité est également importante.

Ainsi, dans le second mode de réalisation, l'organe de compression 4 comprend, outre le joint d'étanchéité 19, un piston 67 qui forme le corps de l'organe de compression 4, et un manchon de serrage 68.

Le piston 67 comprend ainsi le système d'injection d'eau sous pression (incluant la surface de compression 18 avec la douchette et la conduite d'amenée d'eau 20) et porte le second arbre de liaison 38. Par ailleurs, il comprend également un épaulement annulaire périphérique 69.

De même, le manchon de serrage 68 qui, en l'occurrence, ceinture la partie arrière du piston 67, porte un épaulement annulaire périphérique complémentaire 70 formant l'extrémité axiale du manchon de serrage 68 adjacente à la tête de tassage 10. L'épaulement périphérique annulaire complémentaire 70 définit avec l'épaulement annulaire périphérique 69 du piston 67 la rainure dans laquelle est logé le joint d'étanchéité 19. Le manchon de serrage 68 est monté mobile par rapport au piston 67 entre une position de desserrage dans laquelle l'organe de compression 4 est dans son état de déplacement, et une position de serrage dans laquelle l'organe de compression 4 est dans son état de percolation, l'espace séparant l'épaulement annulaire périphérique complémentaire 70 de l'épaulement annulaire périphérique 69 étant plus faible quand le manchon de serrage 68 est dans sa position de serrage que lorsqu'il est dans sa position de desserrage, ce qui entraîne une extension radiale du joint d'étanchéité 19. A position du piston 67 identique, le manchon est plus proche de la tête de tassage 10 quand il est en position de serrage que lorsqu'il est en position de desserrage.

En outre, l'organe de compression 4 et la liaison entre cet organe et l'organe d'activation 5 (ici, les deux bielles 36) coopèrent de sorte que l'organe de compression 5 est dans son état de déplacement quand il passe de sa position de percolation à sa position d'admission et de sa position d'admission à sa position de percolation (et, ici, quand il est dans sa position d'admission), et est dans son état de percolation quand il est dans sa position de percolation. Ainsi, la liaison entre l'organe d'activation 5 et l'organe de compression 4 est elle-même adaptée à entraîner le changement d'état de l'organe de compression 4, et donc le déplacement du manchon de serrage 68 par rapport au piston 67.

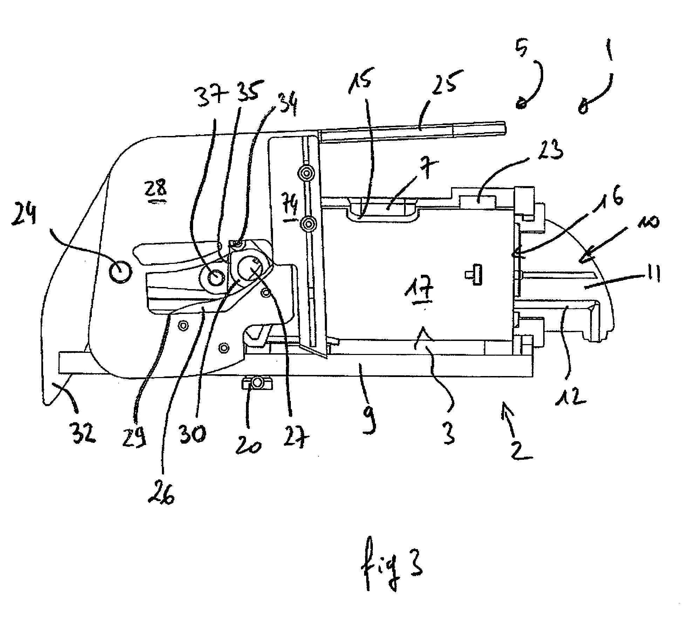

En l'occurrence, le second arbre de liaison 38 est porté par le piston 67 et le manchon de serrage 68 comprend, à sa surface axiale opposée à celle formée par l'épaulement annulaire périphérique complémentaire 70, au moins une (ici, deux) surface de came 71. Chaque surface de came 71 est adaptée à recevoir l'extrémité longitudinale 72 d'une bielle 36 correspondante adjacente à ce second arbre 38. Comme on peut le voir à la figure 3, ici, chaque extrémité longitudinale 72 entraîne la surface de came 71 correspondante quand l'organe de compression 4 arrive (est) en position de percolation (lors du franchissement de la droite 39 ou après le franchissement de celle-ci).

Concernant l'entraînement de l'éjecteur 6, dans les deux premiers modes de réalisation, le levier 5 comprend un organe d'actionnement 73 qui est mobile entre une position d'actionnement et une position activée. Dans ces modes de réalisation, l'organe d'actionnement 73 est sollicité dans sa position d'actionnement par un organe élastique 74.

Aussi bien quand le levier 5 est dans sa position de percolation que lorsqu'il est dans sa position d'admission, l'organe d'actionnement 73 est dans sa position d'actionnement. Lors du déplacement du levier 5 de sa position d'admission à sa position de percolation, l'organe d'actionnement 73 est entraîné par l'éjecteur 6 dans sa position activée et revient dans sa position d'actionnement une fois l'éjecteur 6 franchi. Au contraire, lors du déplacement du levier 5 de sa position de percolation à sa position d'admission, l'organe d'actionnement 73 reste dans sa position d'actionnement, entraîne l'éjecteur 6 de sa position de repos à sa position d'éjection, ce dernier revenant dans sa position de repos une fois que l'organe d'actionnement 73 l'ait franchi. Ainsi, le levier 5 passe par une position d'éjection dans laquelle l'éjecteur 6 est dans sa position d'éjection, dans laquelle la chemise 3 est dans sa position d'éjection, et dans laquelle l'organe de compression 4 a atteint l'ouverture d'éjection 16 de sorte que l'ensemble de la mouture est situé au droit de l'ouverture d'expulsion 8.

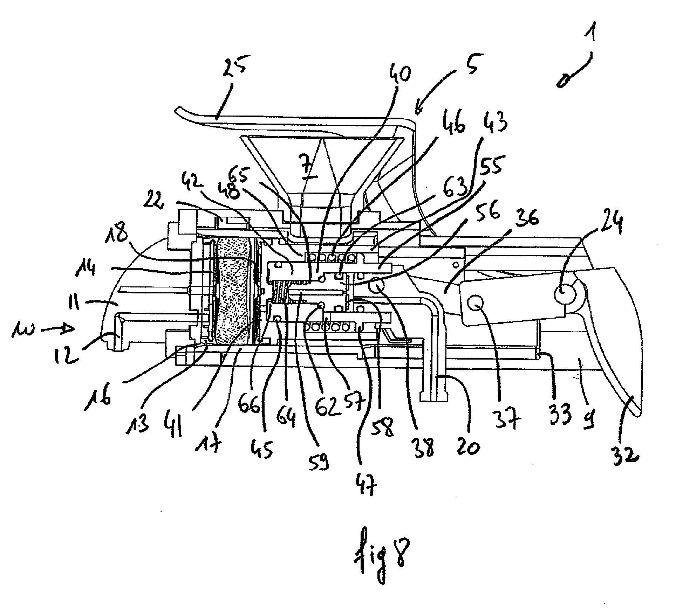

Dans les deux premiers modes de réalisation, comme on peut le voir à la figure 8, l'organe d'actionnement 73 est formé par un ergot 73 situé à l'extrémité libre d'une languette latérale 74 qui est élastiquement déformable et qui est fixée de façon immobile à l'aile d'actionnement 25. L'ergot 73 est adapté à coopérer avec un doigt 75 de l'éjecteur 6. Les surfaces de contact correspondantes de l'ergot 73 et du doigt 75 sont conformées de sorte que le franchissement du doigt 75 est réalisé par l'encliquetage consécutif de l'ergot 73, et que, dans le sens du déplacement de l'organe d'activation 5, l'ergot 73 est mis en butée contre la surface inférieure du doigt 75 et entraîne ce dernier.

Ici, l'éjecteur 6 est une pièce monobloc comprenant la patte d'éjection 22 qui est disposée principalement dans le carter 9, le doigt 75 qui est disposé à l'extérieur du carter 9 et un arbre de rotation 76 (parallèle à l'axe du cylindre 17) qui forme l'axe de rotation de l'éjecteur 6. Ici, l'arbre de rotation 76 est logé dans l'épaisseur du carter 9 et la patte d'éjection 22 traverse le carter 9 de façon à comprendre une extension 77 faisant saillie à l'extérieur au-delà de l'axe de rotation, et à laquelle est fixé le ressort de rappel 21.

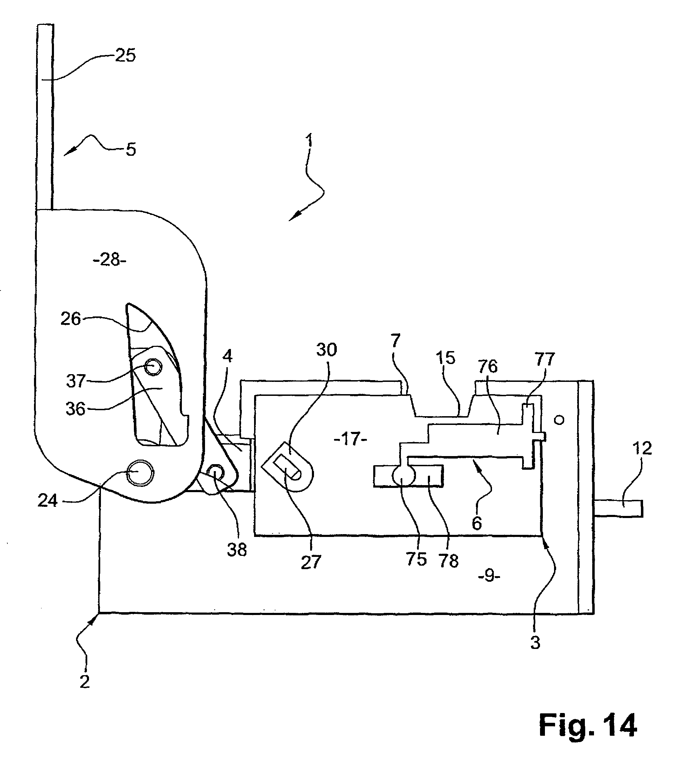

Dans le troisième mode de réalisation illustré par la figure 14, la chemise 3 porte un organe d'actionnement 78 qui est adapté à coopérer avec l'éjecteur 6 de sorte que, quand la chemise 3 est dans sa position de percolation, l'éjecteur 6 est dans sa position de repos, et quand la chemise 3 est dans sa position d'éjection, l'éjecteur 6 est dans sa position d'éjection. Dans ce mode de réalisation, l'organe d'actionnement 78 est formé par une nervure 78 qui s'étend longitudinalement le long de la chemise 3 et qui forme une surface de came ayant une dimension radiale variable. Le doigt 75 est sollicité dans sa position de repos dans laquelle il est en butée contre la nervure 78 de sorte que le mouvement de translation de la chemise commande le mouvement de rotation de l'éjecteur 6 autour de son arbre de rotation 76.

Ainsi, en utilisation, pour obtenir une boisson de café, à partir du levier 5 en position d'admission, un utilisateur introduit de la mouture de café dans la chambre de percolation via l'ouverture d'introduction de mouture 7 et l'ouverture d'admission de mouture 15 qui prolonge cette dernière. A cet instant, la chemise 3 est en position de percolation, l'organe de compression 4 est en position d'admission et en état de déplacement (dans le premier mode de réalisation, le manchon de tassement 41 est dans sa position d'extension et le clapet 56 est dans sa position d'ouverture, et dans le second mode de réalisation, le manchon de serrage 68 est en position de desserrage) et l'éjecteur 6 en position de repos.

Ensuite, l'utilisateur entraîne le levier 5 vers sa position de percolation. Lors de ce déplacement, l'organe de compression 4 (en état de déplacement) est entraîné vers sa position de percolation. Lors de ce déplacement, d'une part, l'organe d'actionnement 73 (l'ergot 73) franchit l'éjecteur 6 (le doigt 75) sans le déplacer, et, d'autre part, les organes d'assujettissement sélectif 26 (les nervures 26) franchissent les organes d'assujettissement sélectif complémentaires 27 (les ergots 27) sans déplacer la chemise 3. Lors de ces franchissements, les organes d'assujettissement sélectif complémentaires 27 (les ergots 27) s'encliquètent avec les organes d'assujettissement sélectif 26 (les nervures 26) et, dans les deux premiers modes de réalisation, l'organe d'actionnement 73 (l'ergot 73) s'encliquète avec l'éjecteur 6 (le doigt 75).

L'immobilisation de la surface de compression 18 de l'organe de compression 4 dans sa position de percolation du fait de la présence de la mouture se produit quand le levier 5 est dans une position de verrouillage qui dépend de la quantité de mouture introduite.

En poursuivant le mouvement du levier 5, dans le premier mode de réalisation, le manchon de tassement 41 génère une force à l'encontre du ressort 46 ce qui permet d'ajuster la position relative de la buse d'injection 40 par rapport au manchon de tassement 41 qui est alors dans une position de tassement ajustée ; dans le second mode de réalisation, l'organe de compression 4 (le piston 67) génère une force à l'encontre du ressort d'ajustement 50 (via le second arbre de liaison 38, les bielles 36 et le premier arbre de liaison 37) permettant ainsi d'ajuster la position de percolation de l'organe de compression 4 à la quantité de mouture. Concomitamment, le premier arbre de liaison 37 franchit la droite 39, et, dans le second mode de réalisation, les organes d'arrêt 52 (les crans 52) des bielles 36 viennent en butée contre les organes d'arrêt complémentaires 53 (les crans 53) de l'organe d'appui 54. Par ailleurs, dans le second mode de réalisation, une fois la droite 39 franchie par le premier arbre de liaison 37, dans le premier mode de réalisation, l'extrémité longitudinale 72 de chaque bielle 36 vient en contact contre la surface de came 71 correspondante du manchon de serrage 68 et entraîne ce dernier dans sa position de serrage. En outre, dans les différents modes de réalisation, en fin de course du levier 5, les surfaces anti-recul 34 de ce dernier viennent glisser contre les surfaces anti-recul complémentaires 35 de la chemise 3 (des embases 30).

Une fois le levier 5 en position de percolation, l'utilisateur peut déclencher la production de la boisson. Juste avant le déclenchement, la chemise 3 et l'organe de compression 4 sont en position de percolation (dans le premier mode de réalisation, le manchon de tassement 41 est dans sa position de tassement ajustée et le clapet 56 est dans sa position d'ouverture, et dans le second mode de réalisation, le manchon de serrage 68 est en position de serrage) et l'éjecteur 6 est en position de repos.

Une fois la pompe activée, l'eau passe par la conduite d'amenée d'eau 20, traverse l'organe de compression 4 en passant par la douchette, et atteint la chambre de percolation où se réalise le café qui s'en échappe par la conduite d'évacuation de boisson 12.

Dans le premier mode de réalisation, lorsque l'eau sous pression sort de la conduite d'amenée d'eau 20, elle vient en butée contre le clapet 56, l'entraîne dans sa position de fermeture et comprime le ressort 64 correspondant. L'eau traverse le clapet 56 par le canal 59, puis la partie aval de la douille d'injection 55, et la surface de compression 18 du manchon de tassement 41. Du fait de l'augmentation de la pression dans la chambre de percolation, le manchon de tassement 41 subit un mouvement de recul dans la direction de sa position de percolation, ce qui comprime le ressort 46. L'espace compris entre la surface de compression 18 et la mouture est alors rempli d'eau sous pression, cet espace étant plus ou moins important en fonction de la quantité de mouture introduite et de la pression de percolation (qui dépend de la mouture). De ce fait, dans le premier exemple, l'ajustement de la surface de compression 18 à la quantité de mouture n'a lieu que lors du tassement de la mouture, avant l'injection de l'eau, la mouture restant toutefois tassée pendant toute la durée de la percolation.

Une fois la boisson obtenue, la pompe est arrêtée, ce qui entraîne l'arrêt de l'alimentation en eau de l'organe de compression 4. En conséquence, dans le premier mode de réalisation, du fait de la différence de pression régnant de part et d'autre du clapet 56, le ressort 64 entraîne ce dernier dans sa position d'ouverture dans laquelle le passage d'évacuation 57 est dégagé. Ainsi, la pression régnant dans la douille d'injection 55 est égale à celle régnant dans le bac de récupération (la pression atmosphérique), ce qui entraîne l'aspiration de l'eau contenue dans la chambre de percolation et son évacuation par le passage d'évacuation 57. Concomitamment, la diminution de la pression dans la chambre de percolation permet au ressort 46 d'entraîner le manchon de tassement 41 dans sa position de tassement ajustée, ce qui permet de comprimer la mouture usagée et d'optimiser son assèchement. Il est à noter que l'eau située en aval de la pompe, dans la conduite d'évacuation d'eau est également aspirée. De ce fait, lors de la réalisation de la prochaine boisson, l'eau sera chaude dès les premières gouttes.

Ensuite, l'utilisateur entraîne le levier 5 vers sa position d'admission. Au début de ce déplacement, dans les présents modes de réalisation, les surfaces anti-recul 34 du levier 5 libèrent les surfaces anti-recul complémentaires 35 de la chemise 3, et, dans le second mode de réalisation, d'une part, les organes d'arrêt 52 (les crans 52) des bielles 36 se libèrent des organes d'arrêt complémentaires 53 (des crans 53) de l'organe d'appui 54, et, d'autre part, l'extrémité longitudinale 72 de chaque bielle 36 libère la surface de came 71 correspondante du manchon de serrage 68.

Lors du déplacement du levier 5 (une fois les surfaces anti-recul complémentaires 35 libérées), les organes d'assujettissement sélectif complémentaires 27 (les ergots 27) viennent en butée contre les organes d'assujettissement sélectif 26 (les nervures 26) puis sont entraînés par ceux-ci, ce qui génère le déplacement de la chemise 3 de sa position de percolation à sa position extrême de va-et-vient.

Par ailleurs, dans le premier mode de réalisation, lors du déplacement du levier 5, la buse d'injection 40 recule, et, de ce fait, le ressort 46 entraîne le manchon de tassement 41 dans sa position d'extension. Dans le second mode de réalisation, une fois les bielles 36 libérées de l'organe d'appui 54, lors du déplacement du levier 5, le ressort d'ajustement 50 entraîne le déplacement du premier arbre de liaison 37 dans sa position avancée, et, une fois cette position atteinte, le levier 5 entraîne le déplacement de l'organe de compression 4 et, par la force des choses (du fait de la libération du manchon de serrage 68), le déplacement du manchon de serrage 68 vers sa position de desserrage.

Du fait du mouvement de recul de la chemise 3, l'ouverture d'expulsion 8 se dégage progressivement. De plus, du fait de la forme des organes d'assujettissement sélectif 26 (des nervures 26) et de l'agencement des bielles 36, la chemise 3 recule avant l'organe de compression 4 de sorte que la mouture se retrouve hors de la chemise 3, au droit de l'ouverture d'expulsion 8.

Dans les deux premiers modes de réalisation, lors du déplacement du levier 5, dans un premier temps, l'organe d'actionnement 73 est sans contact avec l'éjecteur 6 (avec le doigt 75), puis vient en butée contre lui et entraîne rapidement sa rotation jusque dans sa position d'éjection ; au-delà de sa position d'éjection, le levier 5 (l'organe d'actionnement 73) libère l'éjecteur 6 qui retourne dans sa position de repos du fait du ressort de rappel 21. Dans le troisième mode de réalisation, lors du déplacement de la chemise 3 vers sa position extrême de va-et-vient, l'organe d'actionnement 78 (la nervure 78) reçoit en butée l'éjecteur 6 (le doigt 75) et l'entraîne dans sa position d'éjection. L'éjection de la mouture est d'autant plus aisée et propre que celle-ci a été asséchée.

Par ailleurs, en continuant le déplacement du levier 5, la chemise 3 se dirige vers sa position extrême de va-et-vient et l'organe de compression 4 vers sa position d'admission. Quand le levier 5 est dans sa position de libération, chaque organe d'assujettissement sélectif complémentaire 27 (chaque ergot 27) franchit l'extrémité longitudinale 29 de l'organe d'assujettissement sélectif 26 (la nervure 26) et se libère de ce dernier. La chemise 3 est alors immobile jusqu'à ce que le levier 5 atteigne sa position de fermeture, à partir de laquelle la patte d'entraînement 32 entraîne la chemise 3 vers sa position de percolation, l'organe de compression 4 étant par ailleurs toujours entraîné vers sa position d'admission. Lors de ce mouvement, dans le troisième mode de réalisation, le ressort de rappel 21 sollicite l'éjecteur 6 (le doigt 75) de sorte que celui-ci suit la courbe de l'organe d'actionnement 78 (la nervure 78) pour revenir dans sa position de repos.

Quand le levier 5 atteint sa position d'admission, la chemise 3 atteint sa position de percolation et l'organe de compression 4 sa position d'admission.

Ainsi, par deux mouvements particulièrement simples (entraînement d'un levier dans un sens puis dans l'autre), l'utilisateur peut obtenir un café obtenu par percolation, à partir de mouture en vrac.

La présente invention n'est pas limitée au présent mode de réalisation. Il serait ainsi possible que le mouvement de l'organe d'activation soit inversé : qu'il s'abaisse pour permettre l'introduction de la mouture et se relève pour la comprimer. Il serait aussi possible que le levier soit motorisé, ce qui permettrait alors d'automatiser les mouvements du dispositif de percolation sans l'intervention de l'utilisateur (autre que le déclenchement par l'activation d'une commande manuelle telle qu'un bouton). En outre au lieu d'utiliser un organe de compression avec un piston et un manchon de serrage afin d'avoir une bonne étanchéité sans que le déplacement soit gêné par des frottements importants, il serait possible d'employer un joint à lèvre. De plus, la tête de tassage pourrait être mobile par rapport au carter.

La présente invention concerne également d'autres objets:
- un dispositif de percolation pour de la mouture en vrac, comprenant une tête de tassage, un organe de compression qui est monté mobile dans une chambre de compression entre une position d'admission et une position de percolation dans laquelle il est plus proche de la tête de tassage que lorsqu'il est dans sa position d'admission, et qui comprend une surface de compression délimitant axialement, dans la chambre de compression, avec la tête de tassage, une chambre de percolation, et un organe d'activation qui est adapté à déplacer l'organe de compression de l'une à l'autre de ses positions, la liaison entre l'organe d'activation et la surface de compression étant conformée de sorte que la position de percolation de cette dernière est ajustée à la quantité de mouture introduite dans la chambre de percolation ;
- un dispositif de percolation pour de la mouture en vrac, comprenant une chemise délimitant une chambre de compression, et un organe de compression qui est muni d'un joint assurant l'étanchéité avec la chemise, et qui est monté mobile dans la chambre de compression entre une position d'admission et une position de percolation, l'organe de compression étant conformable entre un état de déplacement dans lequel le joint d'étanchéité est comprimé selon une première intensité et un état de percolation dans lequel il est comprimé selon une seconde intensité plus forte que la première de façon à augmenter l'étanchéité ; et
- un dispositif de percolation pour de la mouture en vrac, comprenant une tête de tassage délimitant une chambre de compression qui est accessible de l'extérieur pour permettre l'introduction de mouture en vrac et son expulsion, et un organe de compression qui est monté mobile dans la chambre de compression entre une position d'admission et une position de percolation, l'organe de compression étant conformé de façon à pouvoir évacuer une partie de l'eau contenue dans la chambre de percolation avant l'éjection de la mouture.

Chacun de ces objets peut en outre comprendre l'une ou l'autre des caractéristiques énoncées ci-avant, éventuellement combinées entre elles.

## Revendications

1. Dispositif de percolation (1) comportant une chambre de percolation pour la percolation de mouture de café en vrac, le dispositif (1) comprenant :
- un socle (2) dans lequel est réalisée une ouverture d'expulsion (8) pour l'expulsion de la mouture usagée hors de la chambre de percolation,
- une chemise (3) mobile selon une direction axiale par rapport au socle (2) entre au moins une position de percolation et une position d'éjection, la chemise (3) délimitant une chambre de compression et comportant une ouverture d'éjection (16) axiale pour l'expulsion de la mouture hors de la chambre de percolation,
- une tête de tassage (10), adjacente à l'ouverture d'éjection (16), délimitant axialement la chambre de percolation
- un organe de compression (4) comprenant une surface de compression (18) qui délimite axialement la chambre de percolation à l'opposé de la tête de tassage (10), l'organe de compression (4) étant mobile en translation axialement par rapport au socle (2) entre une position d'admission et une position de percolation dans laquelle il est plus proche de la tête de tassage (10) que lorsqu'il est dans sa position d'admission, et
- un organe d'activation (5) mobile entre une position d'admission et une position de percolation, et est formé par un levier (5)
**caractérisé en ce que**
- la chemise est mobile en translation selon la direction axiale entre la position de percolation dans laquelle elle obstrue l'ouverture d'expulsion (8) et la position d'éjection dans laquelle elle la dégage,
- la tête de tassage (10) délimite axialement l' ouverture d'expulsion (8),
- l'organe de compression (4) est monté coulissant dans la chemise (3) selon l'axe de la chambre de compression,
- le levier (5) est adapté à entraîner de façon différentiée le mouvement de la chemise (3) et celui de l'organe de compression (4) de sorte que, quand la chemise (3) est dans sa position d'éjection, la mouture, entraînée hors de la chemise (3) via l'ouverture d'éjection (16) par la surface de compression (18), est au droit de l'ouverture d'expulsion (8).

2. Dispositif de percolation (1) selon la revendication 1, **caractérisé en ce que** le levier (5) entraîne la chemise (3) dans un mouvement de va-et-vient à partir de sa position de percolation en passant par sa position d'éjection quand il passe de sa position de percolation à sa position d'admission.

3. Dispositif de percolation (1) selon la revendication 2, **caractérisé en ce que** le levier (5) comprend un organe d'assujettissement sélectif (26) adapté à coopérer avec un organe complémentaire d'assujettissement sélectif (27) porté par la chemise (3) de sorte que, quand le levier (5) passe de sa position de percolation à une position de libération située entre sa position de percolation et sa position d'admission, l'organe complémentaire d'assujettissement sélectif (27) est assujetti à l'organe d'assujettissement sélectif (26) et entraîne la chemise (3) de sa position de percolation à sa position extrême de va-et-vient dans laquelle l'organe complémentaire d'assujettissement sélectif (27) se libère de l'organe d'assujettissement sélectif (26), et de sorte que quand le levier (5), de sa position d'admission, atteint sa position de percolation, l'organe complémentaire d'assujettissement sélectif (27), précédemment libéré de l'organe d'assujettissement sélectif (26), s'y assujettit.

4. Dispositif de percolation (1) selon la revendication 3, **caractérisé en ce que** le levier (5) comprend une patte d'entraînement (32) adaptée à venir en butée contre la chemise (3) en position extrême de va-et-vient quand le levier (5) est dans une position de fermeture disposée entre sa position de libération et sa position d'admission, et à entraîner la chemise (3) de sa position extrême de va-et-vient à sa position de percolation quand le levier (5) passe de sa position de fermeture à sa position d'admission.

5. Dispositif de percolation (1) selon l'une des revendications 1 à 4, **caractérisé en ce que** le levier (5) comprend une surface anti-recul (34) adaptée à venir en butée contre une surface anti-recul complémentaire (35) de la chemise (3) quand le levier (5) et la chemise (3) sont dans leur position de percolation de façon à empêcher le déplacement de la chemise (3) pendant la percolation.

6. Dispositif de percolation (1) selon la revendication 5, **caractérisé en ce que** la surface anti-recul complémentaire (35) est portée par l'embase (30) correspondante.

7. Dispositif de percolation (1) selon l'une des revendications 1 à 6, **caractérisé en ce que** le levier (5) laisse la chemise (3) dans sa position de percolation quand il passe de sa position d'admission à sa position de percolation.

8. Dispositif de percolation (1) selon l'une des revendications 1 à 7, **caractérisé en ce que** le levier (5) entraîne l'organe de compression (4), d'une part, de sa position d'admission à sa position de percolation quand il passe de sa position d'admission à sa position de percolation, et, d'autre part, de sa position de percolation à sa position d'admission quand il passe de sa position de percolation à sa position d'admission.

9. Dispositif de percolation (1) selon l'une des revendications 1 à 8, **caractérisé en ce que** la liaison entre le levier (5) et l'organe de compression (4) est une liaison à genouillère et comporte au moins une bielle (36) montée en rotation, d'une part, autour d'un premier arbre de liaison (37) porté par le levier (5), et, d'autre part, autour d'un second arbre de liaison (38) porté par l'organe de compression (4), l'arbre principal (24) par lequel le levier (5) est relié au socle (2) et l'arbre de liaison (38) porté par l'organe de compression (4) formant une droite (39) qui est franchie par l'arbre de liaison (37) porté par le levier (5) quand l'organe de compression (4) est proche de sa position de percolation.

10. Dispositif de percolation (1) selon l'une des revendications 1 à 9, **caractérisé en ce que** la liaison entre le levier (5) et la surface de compression (18) est conformée de sorte que la position de percolation de cette dernière est ajustée à la quantité de mouture introduite dans la chambre de percolation.

11. Dispositif de percolation (1) selon la revendication 10 dépendante de la revendication 8, **caractérisé en ce que** l'un (37) des deux arbres de liaison (37, 38) est monté de façon coulissante dans une fente oblongue (49) entre une position avancée et une position reculée et est sollicité dans sa position avancée par un élément élastique (50) de façon à ajuster la position de percolation de l'organe de compression (4).

12. Dispositif de percolation (1) selon la revendication 10 dépendante de la revendication 9, **caractérisé en ce que** l'organe de compression (4) comprend, d'une part, une buse d'injection (40) qui porte le second arbre de liaison (38), et, d'autre part, un manchon de tassement (41) qui porte la surface de compression (18) et qui est monté mobile par rapport à la buse d'injection (40) entre une position de percolation et une position d'extension dans laquelle ce manchon de tassement est plus proche de la tête de tassage (10) qu'en position de percolation.

13. Dispositif de percolation (1) selon l'une des revendications 1 à 12, **caractérisé en ce que** l'organe de compression (4) comprend un joint d'étanchéité (19) qui est adapté à assurer l'étanchéité avec la chemise (3), l'organe de compression (4) étant conformable entre un état de déplacement dans lequel le joint d'étanchéité (19) est comprimé selon une première intensité et un état de percolation dans lequel il est comprimé selon une seconde intensité plus forte que la première de façon à augmenter l'étanchéité, l'organe de compression (4) étant dans son état de déplacement quand il se déplace entre sa position d'admission et sa position de percolation, et dans son état de percolation quand il est dans sa position de percolation.

14. Dispositif de percolation (1) selon la revendication 13, **caractérisé en ce que** l'organe de compression (4) comprend, d'une part, un piston (67) portant la surface de compression (18) et un épaulement annulaire périphérique (69), et, d'autre part, un manchon de serrage (68) portant un épaulement annulaire périphérique complémentaire (70) qui définit avec l'épaulement annulaire périphérique (69) une rainure dans laquelle est logé le joint d'étanchéité (19), le manchon de serrage (68) étant monté mobile par rapport au piston (67) entre une position de serrage dans laquelle l'organe de compression (4) est dans son état de percolation, et une position de desserrage dans laquelle cet organe de compression est dans son état de déplacement.

15. Dispositif de percolation (1) selon la revendication 14, **caractérisé en ce que** la liaison entre le levier (5) et l'organe de compression (4) est adaptée à entraîner le déplacement du manchon de serrage (68) par rapport au piston (67).

16. Dispositif de percolation (1) selon l'une des revendications 1 à 15, **caractérisé en ce que** l'organe de compression (4) est conformé de façon à pouvoir évacuer une partie de l'eau contenue dans la chambre de percolation avant l'éjection de la mouture par différence de pression.

17. Dispositif de percolation (1) selon la revendication 16, **caractérisé en ce que** l'organe de compression (4) comprend, d'une part, une douille d'injection (55) qui est traversée par un passage d'évacuation (57) et qui relie de façon étanche une conduite d'amenée d'eau (20) à la surface de compression (18), et, d'autre part, un clapet (56) qui est monté mobile par rapport à la douille d'injection (55) entre une position de fermeture dans laquelle ce clapet obstrue le passage d'évacuation (57) et une position d'ouverture dans laquelle il la dégage.

18. Dispositif de percolation (1) selon l'une des revendications 1 à 17, **caractérisé en ce qu'**il comprend un éjecteur (6) qui est monté mobile entre une position de repos et une position d'éjection dans laquelle il éjecte la mouture hors de la chambre de percolation par l'ouverture d'expulsion (8).

19. Dispositif de percolation (1) selon la revendication 18, **caractérisé en ce que** l'éjecteur (6) est sollicité dans sa position de repos par un ressort de rappel (21).

20. Dispositif de percolation (1) selon la revendication 18 ou 19, **caractérisé en ce que** le déplacement de l'éjecteur (6) est entraîné par le levier (5) de sorte que, quand ce dernier passe de sa position de percolation à sa position d'admission, il entraîne l'éjecteur (6) dans sa position d'éjection dans laquelle la chemise (3) est dans sa position d'éjection et dans laquelle la mouture, entraînée hors de la chemise (3) par la surface de compression (18), est au droit de l'ouverture d'expulsion (8).

21. Dispositif de percolation (1) selon la revendication 20, **caractérisé en ce que** la chemise (3) porte un organe d'actionnement (78) qui est adapté à entraîner l'éjecteur (6) dans sa position d'éjection quand la chemise (3) est dans sa position d'éjection.

22. Dispositif de percolation (1) selon la revendication 21, **caractérisé en ce que** l'organe d'actionnement (78) est adapté à coopérer avec l'éjecteur (6) de sorte que, quand la chemise (3) est dans sa position de percolation, l'éjecteur (6) est dans sa position de repos, et quand elle est dans sa position d'éjection, l'éjecteur (6) est dans sa position d'éjection.

## Patentansprüche

1. Perkolationsvorrichtung (1), die eine Perkolationskammer für die Perkolation von losem Kaffeemehl aufweist, wobei die Vorrichtung (1) enthält:
- einen Sockel (2), in dem eine Ausstoßöffnung (8) für den Ausstoß des verbrauchten Mehls aus der Perkolationskammer ausgebildet ist,
- eine in einer axialen Richtung bezüglich des Sockels (2) zwischen mindestens einer Perkolationsstellung und einer Auswurfstellung bewegliche Hülle (3), wobei die Hülle (3) eine Presskammer begrenzt und eine axiale Auswurföffnung (16) für den Ausstoß des Mehls aus der Perkolationskammer aufweist,
- einen der Auswurföffnung (16) benachbarten Feststampfkopf (10), der die Perkolationskammer axial begrenzt,
- ein Pressorgan (4), das eine Pressfläche (18) enthält, die die Perkolationskammer entgegengesetzt zum Feststampfkopf (10) axial begrenzt, wobei das Pressorgan (4) bezüglich des Sockels (2) zwischen einer Einlassstellung und einer Perkolationsstellung axial translationsbeweglich ist, in der es dem Feststampfkopf (10) näher ist, als wenn es in seiner Einlassstellung ist, und
- ein Betätigungsorgan (5), das zwischen einer Einlassstellung und einer Perkolationsstellung beweglich ist und von einem Hebel (5) geformt wird,
**dadurch gekennzeichnet, dass**
- die Hülle in der axialen Richtung zwischen der Perkolationsstellung, in der sie die Ausstoßöffnung (8) verdeckt, und der Auswurfstellung translationsbeweglich ist, in der sie sie freilegt,
- der Feststampfkopf (10) die Ausstoßöffnung (8) axial begrenzt,
- das Pressorgan (4) gemäß der Achse der Presskammer gleitend in der Hülle (3) montiert ist,
- der Hebel (5) geeignet ist, um die Bewegung der Hülle (3) und diejenige des Pressorgans (4) differenziert herbeizuführen, damit, wenn die Hülle (3) in ihrer Auswurfstellung ist, das Mehl, das über die Auswurföffnung (16) von der Pressfläche (18) aus der Hülle (3) mitgenommen wird, sich vor der Ausstoßöffnung (8) befindet.

2. Perkolationsvorrichtung (1) nach Anspruch 1, **dadurch gekennzeichnet, dass** der Hebel (5) die Hülle (3) ausgehend von ihrer Perkolationsstellung in eine Hin- und Herbewegung versetzt, indem sie über ihre Auswurfstellung geht, wenn er von seiner Perkolationsstellung in seine Einlassstellung übergeht.

3. Perkolationsvorrichtung (1) nach Anspruch 2, **dadurch gekennzeichnet, dass** der Hebel (5) ein Organ zur selektiven Befestigung (26) enthält, das geeignet ist, um mit einem von der Hülle (3) getragenen komplementären Organ zur selektiven Befestigung (27) zusammenzuwirken, so dass, wenn der Hebel (5) von seiner Perkolationsstellung in eine Freigabestellung übergeht, die sich zwischen seiner Perkolationsstellung und seiner Einlassstellung befindet, das komplementäre Organ zur selektiven Befestigung (27) am Organ zur selektiven Befestigung (26) befestigt ist und die Hülle (3) von ihrer Perkolationsstellung in ihre Hin- und Her-Endstellung mitnimmt, in der das komplementäre Organ zur selektiven Befestigung (27) sich vom Organ zur selektiven Befestigung (26) befreit, und dass, wenn der Hebel (5) ausgehend von seiner Einlassstellung seine Perkolationsstellung erreicht, das komplementäre Organ zur selektiven Befestigung (27), das vorher vom Organ zur selektiven Befestigung (26) befreit wurde, sich daran befestigt.

4. Perkolationsvorrichtung (1) nach Anspruch 3, **dadurch gekennzeichnet, dass** der Hebel (5) eine Antriebslasche (32) enthält, die geeignet ist, um in der Hin- und Her-Endstellung gegen die Hülle (3) in Anschlag zu kommen, wenn der Hebel (5) in einer Schließstellung ist, die sich zwischen seiner Freigabestellung und seiner Einlassstellung befindet, und um die Hülle (3) von ihrer Hin- und Her-Endstellung in ihre Perkolationsstellung zu versetzen, wenn der Hebel (5) von seiner Schließstellung in seine Einlassstellung übergeht.

5. Perkolationsvorrichtung (1) nach einem der Ansprüche 1 bis 4, **dadurch gekennzeichnet, dass** der Hebel (5) eine Rücklaufverhinderungsfläche (34) enthält, die geeignet ist, um gegen eine komplementäre Rücklaufverhinderungsfläche (35) der Hülle (3) in Anschlag zu kommen, wenn der Hebel (5) und die Hülle (3) in ihrer Perkolationsstellung sind, um die Verschiebung der Hülle (3) während der Perkolation zu verhindern.

6. Perkolationsvorrichtung (1) nach Anspruch 5, **dadurch gekennzeichnet, dass** die komplementäre Rücklaufverhinderungsfläche (35) von der entsprechenden Grundplatte (30) getragen wird.

7. Perkolationsvorrichtung (1) nach einem der Ansprüche 1 bis 6, **dadurch gekennzeichnet, dass** der Hebel (5) die Hülle (3) in ihrer Perkolationsstellung lässt, wenn er von seiner Einlassstellung in seine Perkolationsstellung übergeht.

8. Perkolationsvorrichtung (1) nach einem der Ansprüche 1 bis 7, **dadurch gekennzeichnet, dass** der Hebel (5) das Pressorgan (4) einerseits von seiner Einlassstellung in seine Perkolationsstellung, wenn er von seiner Einlassstellung in seine Perkolationsstellung übergeht, und andererseits von seiner Perkolationsstellung in seine Einlassstellung antreibt, wenn er von seiner Perkolationsstellung in seine Einlassstellung übergeht.

9. Perkolationsvorrichtung (1) nach einem der Ansprüche 1 bis 8, **dadurch gekennzeichnet, dass** die Verbindung zwischen dem Hebel (5) und dem Pressorgan (4) eine Kugelgelenkverbindung ist und mindestens eine Stange (36) aufweist, die einerseits um eine erste vom Hebel (5) getragene Verbindungswelle (37) und andererseits um eine vom Pressorgan (4) getragene Verbindungswelle (38) drehend montiert ist, wobei die Hauptwelle (24), über die der Hebel (5) mit dem Sockel (2) verbunden ist, und die vom Pressorgan (4) getragene Verbindungswelle (38) eine Gerade (39) formen, die von der vom Hebel (5) getragenen Welle (37) überquert wird, wenn das Pressorgan (4) nahe seiner Perkolationsstellung ist.

10. Perkolationsvorrichtung (1) nach einem der Ansprüche 1 bis 9, **dadurch gekennzeichnet, dass** die Verbindung zwischen dem Hebel (5) und der Pressfläche (18) so gestaltet ist, dass die Perkolationsstellung dieser letzteren an die Menge von in die Perkolationskammer eingeführtem Mehl angepasst wird.

11. Perkolationsvorrichtung (1) nach Anspruch 10 abhängig von Anspruch 8, **dadurch gekennzeichnet, dass** eine (37) der zwei Verbindungswellen (37, 38) in einem Längsschlitz (49) zwischen einer vorgeschobenen Stellung und einer zurückgezogenen Stellung gleitend montiert ist und in ihre vorgeschobene Stellung von einem elastischen Element (50) beaufschlagt wird, um die Perkolationsstellung des Pressorgans (4) anzupassen.

12. Perkolationsvorrichtung (1) nach Anspruch 10 abhängig von Anspruch 9, **dadurch gekennzeichnet, dass** das Pressorgan (4) einerseits eine Einspritzdüse (40), die die zweite Verbindungswelle (38) trägt, und anderseits eine Feststampfmuffe (41) enthält, die die Pressfläche (18) trägt und die bezüglich der Einspritzdüse (40) zwischen einer Perkolationsstellung und einer Ausdehnungsstellung beweglich montiert ist, in der diese Feststampfmuffe dem Feststampfkopf (10) näher ist als in der Perkolationsstellung.

13. Perkolationsvorrichtung (1) nach einem der Ansprüche 1 bis 12, **dadurch gekennzeichnet, dass** das Pressorgan (4) eine Dichtung (19) enthält, die geeignet ist, um die Dichtheit mit der Hülle (3) zu gewährleisten, wobei das Pressorgan (4) zwischen einem Verschiebezustand, in dem die Dichtung (19) gemäß einer ersten Stärke zusammengepresst ist, und einem Perkolationszustand gestaltbar ist, in dem sie gemäß einer zweiten Stärke größer als die erste zusammengepresst ist, um die Dichtheit zu erhöhen, wobei das Pressorgan (4) in seinem Verschiebezustand ist, wenn es sich zwischen seiner Einlassstellung und seiner Perkolationsstellung verschiebt, und in seinem Perkolationszustand ist, wenn es in seiner Perkolationsstellung ist.

14. Perkolationsvorrichtung (1) nach Anspruch 13, **dadurch gekennzeichnet, dass** das Pressorgan (4) einerseits einen die Pressfläche (18) tragenden Kolben (67) und eine Umfangsringschulter (69) und andererseits eine Spannmuffe (68) enthält, die eine komplementäre Umfangsringschulter (70) trägt, welche mit der Umfangsringschulter (69) eine Rille definiert, in der die Dichtung (19) untergebracht ist, wobei die Spannmuffe (68) bezüglich des Kolbens (67) zwischen einer Spannstellung, in der das Pressorgan (4) in seinem Perkolationszustand ist, und einer Lösestellung beweglich montiert ist, in der dieses Pressorgan in seinem Verschiebezustand ist.

15. Perkolationsvorrichtung (1) nach Anspruch 14, **dadurch gekennzeichnet, dass** die Verbindung zwischen dem Hebel (5) und dem Pressorgan (4) geeignet ist, um die Verschiebung der Spannmuffe (68) bezüglich des Kolbens (67) zu bewirken.

16. Perkolationsvorrichtung (1) nach einem der Ansprüche 1 bis 15, **dadurch gekennzeichnet, dass** das Pressorgan (4) so gestaltet ist, dass es einen Teil des in der Perkolationskammer enthaltenen Wassers vor dem Auswurf des Mehls durch Druckdifferenz abführen kann.

17. Perkolationsvorrichtung (1) nach Anspruch 16, **dadurch gekennzeichnet, dass** das Pressorgan (4) einerseits eine Einspritzhülse (55), die von einem Abfuhrkanal (57) durchquert wird und eine Wasserzufuhrleitung (20) dicht mit der Pressfläche (18) verbindet, und anderseits eine Ventilklappe (56) enthält, die bezüglich der Einspritzhülse (55) zwischen einer Schließstellung, in der diese Ventilklappe den Abfuhrkanal (57) verschließt, und einer Öffnungsstellung beweglich montiert ist, in der sie ihn freigibt.

18. Perkolationsvorrichtung (1) nach einem der Ansprüche 1 bis 17, **dadurch gekennzeichnet, dass** sie einen Auswerfer (6) enthält, der zwischen einer Ruhestellung und einer Auswurfstellung beweglich montiert ist, in der er das Mehl aus der Perkolationskammer durch die Ausstoßöffnung (8) auswirft.

19. Perkolationsvorrichtung (1) nach Anspruch 18, **dadurch gekennzeichnet, dass** der Auswerfer (6) von einer Rückstellfeder (21) in seine Ruhestellung beaufschlagt wird.

20. Perkolationsvorrichtung (1) nach Anspruch 18 oder 19, **dadurch gekennzeichnet, dass** die Verschiebung des Auswerfers (6) vom Hebel (5) angetrieben wird, so dass letzterer, wenn er von seiner Perkolationsstellung in seine Einlassstellung übergeht, den Auswerfer (6) in seine Auswurfstellung versetzt, in der die Hülle (3) in ihrer Auswurfstellung ist, und in der das von der Pressfläche (18) aus dem Hülle (3) heraus mitgenommen Mehl sich vor der Ausstoßöffnung (8) befindet.

21. Perkolationsvorrichtung (1) nach Anspruch 20, **dadurch gekennzeichnet, dass** die Hülle (3) ein Betätigungsorgan (78) trägt, das geeignet ist, um den Auswerfer (6) in seine Auswurfstellung anzutreiben, wenn die Hülle (3) in ihrer Auswurfstellung ist.

22. Perkolationsvorrichtung (1) nach Anspruch 21, **dadurch gekennzeichnet, dass** das Betätigungsorgan (78) geeignet ist, um mit dem Auswerfer (6) zusammenzuwirken, damit, wenn die Hülle (3) in ihrer Perkolationsstellung ist, der Auswerfer (6) in seiner Ruhestellung ist, und wenn sie in ihrer Auswurfstellung ist, der Auswerfer (6) in seiner Auswurfstellung ist.

## Claims

1. Percolator device (1) including a percolation chamber for the percolation of loose ground coffee, the device (1) including:
- a base (2) in which an expulsion opening (8) is provided for the expulsion of spent grounds from the percolation chamber,
- a jacket (3) mobile in an axial direction relative to the base (2) between at least a percolation position and an ejection position, the jacket (3) delimiting a compression chamber and including an axial ejection opening (16) for the expulsion of the grounds from the percolation chamber,
- a compaction head (10), adjacent to the ejection opening (16), delimiting the percolation chamber in the axial direction,
- a compression member (4) having a compression surface (18) which delimits the percolation chamber in the axial direction at the end opposite the compaction head (10), the compression member (4) being mobile axially in translation relative to the base (2) between an intake position and a percolation position in which it is closer to the compaction head (10) than when it is in its intake position, and
- an activation member (5) mobile between an intake position and a percolation position and formed by a lever (5),
**characterized in that**:
- the jacket is mobile in translation in the axial direction between the percolation position in which it locks the expulsion opening (8) and the ejection position in which it exposes it,
- the compaction head (10) delimits the expulsion opening (8) in the axial direction,
- the compression member (4) is mounted in the jacket (3) to slide along the axis of the compression chamber,
- the lever (5) is adapted to drive the movement of the jacket (3) and that of the compression member (4) differently so that, when the jacket (3) is in its ejection position, the grounds, driven out of the jacket (3) via the ejection opening (16) by the compression surface (18), line up with the expulsion opening (8).

2. Percolator device (1) according to Claim 1, **characterized in that** the lever (5) drives a to-and-fro movement of the jacket (3) starting from its percolation position and passing through its ejection position when it moves from its percolation position to its intake position.

3. Percolator device (1) according to Claim 2, **characterized in that** the lever (5) includes a selective coupling member (26) adapted to cooperate with an additional selective coupling member (27) carried by the jacket (3) so that, when the lever (5) moves from its percolation position to a release position situated between its percolation position and its intake position, the additional selective coupling member (27) is coupled to the selective coupling member (26) and drives the jacket (3) from its percolation position to its extreme to-and-fro position in which the additional selective coupling member (27) is released from the selective coupling member (26) and so that when the lever (5) reaches its percolation position from its intake position the additional selective coupling member (27), released from the selective coupling member (26) beforehand, is coupled to it.

4. Percolator device (1) according to Claim 3, **characterized in that** the lever (5) includes a driving lug (32) adapted to abut against the jacket (3) in the extreme to-and-fro position when the lever (5) is in a closing position disposed between its release position and its intake position and to drive the jacket (3) from its extreme to-and-fro position to its percolation position when the lever (5) moves from its closing position to its intake position.

5. Percolator device (1) according to any one of Claims 1 to 4, **characterized in that** the lever (5) includes a non-return surface (34) adapted to abut against an additional non-return surface (35) of the jacket (3) when the lever (5) and the jacket (3) are in their percolation position so as to prevent movement of the jacket (3) during percolation.

6. Percolator device (1) according to Claim 5, **characterized in that** the additional non-return surface (35) is carried by the corresponding base (30).

7. Percolator device (1) according to any one of Claims 1 to 6, **characterized in that** the lever (5) leaves the jacket (3) in its percolation position when it moves from its intake position to its percolation position.

8. Percolator device (1) according to any one of Claims 1 to 7, **characterized in that** the lever (5) drives the compression member (4), on the one hand, from its intake position to its percolation position when it moves from its intake position to its percolation position and, on the other hand, from its percolation position to its intake position when it moves from its percolation position to its intake position.

9. Percolator device (1) according to any one of Claims 1 to 8, **characterized in that** the connection between the lever (5) and the compression member (4) is a toggle connection and includes at least one link (36) mounted to rotate, on the one hand, about a first connecting shaft (37) carried by the lever (5) and, on the other hand, about a second connecting shaft (38) carried by the compression member (4), the main shaft (24) by which the lever (5) is connected to the base (2) and the connecting shaft (38) carried by the compression member (4) defining a straight line segment (39) that is crossed by the connecting shaft (37) carried by the lever (5) when the compression member (4) is close to its percolation position.

10. Percolator device (1) according to any one of Claims 1 to 9, **characterized in that** the connection between the lever (5) and the compression surface (18) is conformed so that the percolation position of the latter is adjusted to suit the quantity of grounds introduced into the percolation chamber.

11. Percolator device (1) according to Claim 10 depending on Claim 8, **characterized in that** one shaft (37) of the two connecting shafts (37, 38) is mounted to slide in an oblong slot (49) between an advanced position and a retracted position and is urged into its advanced position by a spring member (50) so as to adjust the percolation position of the compression member (4).

12. Percolator device (1) according to Claim 10 depending on Claim 9, **characterized in that** the compression member (4) includes, on the one hand, an injection nozzle (40) that carries the second connecting shaft (38) and, on the other hand, a compaction sleeve (41) which carries the compression surface (18) and is mounted to be mobile relative to the injection nozzle (40) between a percolation position and an extended position in which this compaction sleeve is nearer the compaction head (10) than in the percolation position.

13. Percolator device (1) according to any one of Claims 1 to 12, **characterized in that** the compression member (4) includes a seal (19) that is adapted to provide the seal with the jacket (3), the compression member (4) being conformable between a displacement state in which the seal (19) is compressed with a first intensity and a percolation state in which it is compressed with a second intensity higher than the first so as to enhance the seal, the compression member (4) being in its displacement state when it is displaced between its intake position and its percolation position and in its percolation state when it is in its percolation position.

14. Percolator device (1) according to Claim 13, **characterized in that** the compression member (4) includes, on the one hand, a piston (67) carrying the compression surface (18) and an annular peripheral shoulder (69) and, on the other hand, a clamping sleeve (68) carrying an additional annular peripheral shoulder (70) that defines with the annular peripheral shoulder (69) a groove in which the seal (19) is housed, the clamping sleeve (68) being mounted to be mobile relative to the piston (67) between a clamping position in which the compression member (4) is in its percolation state and an unclamping position in which this compression member is in its displacement state.

15. Percolator device (1) according to Claim 14, **characterized in that** the connection between the lever (5) and the compression member (4) is adapted to drive the movement of the clamping sleeve (68) relative to the piston (67).

16. Percolator device (1) according to any one of Claims 1 to 15, **characterized in that** the compression member (4) is conformed so as to be able to evacuate some of the water contained in the percolation chamber before ejection of the grounds by virtue of a pressure difference.

17. Percolator device (1) according to Claim 16, **characterized in that** the compression member (4) includes, on the one hand, an injection bush (55) through which there is an evacuation passage (57) and which connects in a sealed manner a water feed conduit (20) to the compression surface (18) and, on the other hand, a valve (56) that is mounted to be mobile relative to the injection bush (55) between a closed position in which this valve blocks the evacuation passage (57) and an open position in which it exposes it.

18. Percolator device (1) according to any one of Claims 1 to 17, **characterized in that** it includes an ejector (6) that is mounted to be mobile between a rest position and an ejection position in which it ejects the grounds from the percolation chamber via the expulsion opening (8).

19. Percolator device (1) according to Claim 18, **characterized in that** the ejector (6) is urged into its rest position by a return spring (21).

20. Percolator device (1) according to Claim 18 or 19, **characterized in that** the movement of the ejector (6) is driven by the lever (5) so that, when the latter moves from its percolation position to its intake position, it drives the ejector (6) into its ejection position in which the jacket (3) is in its ejection position and in which the grounds driven out of the jacket (3) by the compression surface (18) line up with the expulsion opening (8).

21. Percolator device (1) according to Claim 20, **characterized in that** the jacket (3) carries an actuating member (78) that is adapted to drive the ejector (6) into its ejection position when the jacket (3) is in its ejection position.

22. Percolator device (1) according to Claim 21, **characterized in that** the actuating member (78) is adapted to cooperate with the ejector (6) so that when the jacket (3) is in its percolation position the ejector (6) is in its rest position and when it is in its ejection position the ejector (6) is in its ejection position.
